# EUROPEAN PATENT APPLICATION

(11) **EP 4 487 673 A1**
(43) Date of publication of application: **08.01.2025**
(21) Application number: 24185054.4
(22) Date of filing: 27.06.2024
(51) Int. Cl.: A01D 41/14, A01D 41/127, A01D 45/02

(54) **SYSTEM AND METHOD FOR CONTROLLING DECK PLATES VIA CROP GEOMETRIES MEASURED USING IMAGING PROCESSING**

(30) Priority: 28.06.2023 US 202363510693 P
(71) Applicant: CNH Industrial Belgium N.V., 8210 Zedelgem (BE); CNH Industrial America LLC, New Holland, PA 17557 (US)
(72) Inventor: Hunt, Cory Douglas, New Holland, 17557 (US); Martin, Jethro, New Holland, 17557 (US); Linde, Karl Robert, New Holland, 17557 (US); Missotten, Bart M.A., 8210 Zedelgem (BE); Kukkala, Sai Niranjan Reddy, 8210 Zedelgem (BE); Vanlerberghe, Jasper, 8210 Zedelgem (BE)
(74) Representative: CNH Industrial IP Department

(57) **Abstract**

A deck plate positioning system (118) for an agricultural harvester (100) includes a controller (120) comprising a memory (124) and a processor (122). The controller (120) is configured to receive a sensor signal indicative of an image of harvested crop material within a feederhouse (107) of the agricultural harvester (100). The controller (120) is also configured to analyze the image to measure at least one metric of the harvested crop material related to physical geometries and sizes of the harvested crop material within the feederhouse (107). The controller (120) is further configured to automatically adjust positions of deck plates (212) of a header (200) of the agricultural harvester (100) based on the at least one metric.

## Description

### BACKGROUND

This section is intended to introduce the reader to various aspects of art that may be related to various aspects of the present disclosure, which are described below. This discussion is believed to be helpful in providing the reader with background information to facilitate a better understanding of the various aspects of the present disclosure. Accordingly, it should be understood that these statements are to be read in this light, and not as admissions of prior art.

A harvester may be used to harvest crops, such as barley, beans, beets, carrots, corn, cotton, flax, oats, potatoes, rye, soybeans, wheat, or other plant crops. The harvester may include or be coupled to a header, which may be designed to efficiently harvest certain types of crops. For example, a corn header may be designed to efficiently harvest corn. The corn header may include row units that each include components that operate to separate the ear of corn from the remainder of the corn plant as the harvester travels through a field. The remaining corn plant material is often left in the field to decompose and enhance the soil quality for future crop development.

Among the components of the row units that operate to separate the ear of corn from the remainder of the corn plant are deck plates. Certain row units include feed rollers that engage a stalk and drive the stalk downwardly and rearwardly. As the stalk is driven downwardly, the ear engages deck plates positioned above the feed rollers, thereby separating the ear from the stalk. The ear moves rearwardly to the conveyors, and the stalk is deposited on the field. The positions of the deck plates relative to each other is important in harvesting the ears of corn. Skilled operators have to actively adjust a corn header's deck plate position to ensure that gaps between adjacent deck plates are small enough to pick an ear of corn but large enough to not collect the stalk. The ideal deck plate position will vary as crop conditions vary. Physical geometries and sizes of the ear, cob, and kernel being harvested ultimately dictate what deck plate position is small enough to effectively pick the ear of corn. However, it is difficult for the operator to accurately adjust the corn header's deck plate as crop conditions change.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

In certain embodiments, a deck plate positioning system for an agricultural harvester includes a controller including a memory and a processor. The controller is configured to receive a sensor signal indicative of an image of harvested crop material within a feederhouse of the agricultural harvester. The controller is also configured to analyze the image to measure at least one metric of the harvested crop material related to physical geometries and sizes of the harvested crop material within the feederhouse. The controller is further configured to automatically adjust positions of deck plates of a header of the agricultural harvester based on the at least one metric.

In certain embodiments, a method for controlling positioning of deck plates of an agricultural harvester includes receiving, at a controller including a processor and a memory, a sensor signal indicative of an image of harvested crop material within a feederhouse of the agricultural harvester. The method also includes analyzing, via the controller, the image to measure at least one metric of the harvested crop material related to physical geometries and sizes of the harvested crop material within the feederhouse. The method further includes automatically adjusting, via the controller, positions of deck plates of a header of the agricultural harvester based on the at least one metric.

In certain embodiments, an agricultural harvester includes a header including a plurality of row units configured to receive crop, wherein each row unit includes a pair of deck plates separated from one another along a lateral axis across a width of the header to define a gap for movement of crop residue between the pair of deck plates. The agricultural harvester also includes a controller including a memory and a processor. The controller is configured to receive a sensor signal indicative of an image of harvested crop material within a feederhouse of the agricultural harvester. The controller is also configured to analyze the image to measure at least one metric of the harvested crop material related to physical geometries and sizes of the harvested crop material within the feederhouse. The controller is further configured to automatically adjust a position of each pair deck plates of the header of the agricultural harvester based on the at least one metric.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an agricultural harvester having a corn header, in accordance aspects of the present disclosure;
FIG. 2 is a perspective view of a header that may be employed the harvester of FIG. 1, in accordance with aspects of the present disclosure;
FIG. 3 is a perspective front view of a portion of the header of FIG. 2, in accordance with aspects of the present disclosure;
FIG. 4 is a flowchart of a method for controlling positioning of deck plates of an agricultural harvester, in accordance with aspects of the present disclosure;
FIG. 5 is an example of an internal image of harvested crop material within a feederhouse with a metric of a cob measured, in accordance with aspects of the present disclosure;
FIG. 6 is an example of an internal image of harvested crop material within a feederhouse with a metric of an ear measured, in accordance with aspects of the present disclosure;
FIG. 7 is an example of an internal image of harvested crop material within a feederhouse with a metric of a kernel measured, in accordance with aspects of the present disclosure;
FIG. 8 is an example of an internal image of harvested crop material within a feederhouse to be analyzed, in accordance with aspects of the present disclosure;
FIG. 9 is an example of an analyzed internal image of harvested crop material within a feederhouse (e.g., highlighting loose kernels and ear of corn), in accordance with aspects of the present disclosure; and
FIG. 10 is an example of an analyzed internal image of harvested crop material within a feederhouse (e.g., identifying an ear of corn), in accordance with aspects of the present disclosure.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

The present disclosure relates generally to an agricultural harvester and, more specifically, to controlling deck plates via crop geometries measured using imaging processing.

The process of farming typically begins with planting seeds within a field. Over time, the seeds grow and eventually become harvestable crops. Typically, only a portion of each crop is commercially valuable, so each crop is harvested to separate the usable material from the remainder of the crop. For example, a harvester may include or be coupled to a header to harvest crops within the field. The header may be a corn header that is configured to efficiently harvest corn within the field. The corn header may include multiple row units arranged across a width of the corn header, and each row unit may include deck plates, stalk rollers, other component(s), or a combination thereof, that operate to separate ears of corn from stalks and materials other than grain (e.g., crop residue) as the harvester travels through the field. For example, corn headers are capable of chopping the stalks of corn quickly and collecting the corn ears while leaving behind the stalks, leaves, and any other unwanted and biodegradable byproduct. Conveyors (e.g., augers) carry the ears of corn into the harvester (e.g., a chassis of the harvester), such as toward processing machinery of the harvester, for further processing.

During harvesting, certain row units of the corn header include feed rollers that engage a stalk and drive the stalk downwardly and rearwardly. As the stalk is driven downwardly, the ear engages deck plates positioned above the feed rollers, thereby separating the ear from the stalk. The ear moves rearwardly to the conveyors, and the stalk is deposited on the field. The positions of the deck plates relative to each other is important in harvesting the ears of corn. Skilled operators have to actively adjust a corn header's deck plate position to ensure that gaps between adjacent deck plates are small enough to pick an ear of corn but large enough to not collect the stalk. The ideal deck plate position will vary as crop conditions vary. Physical geometries and sizes of the ear, cob, and kernel being harvested ultimately dictate what deck plate position is small enough to effectively pick the ear of corn. However, it is difficult for the operator to accurately adjust the corn header's deck plate as crop conditions change.

Thus, it is presently recognized that a system to automatically adjust the deck plates (in particular, a positioning of the deck plates) based on crop conditions may improve harvesting of the crop. Accordingly, the present embodiments relate to systems and methods for controlling (via a controller) a position of deck plates by receiving a sensor signal indicative of an image of harvested crop material within a feederhouse of the agricultural harvester (e.g., via at least one camera of an internal imaging system located within the feederhouse on a floor of the feederhouse), analyzing the image to measure at least one metric of the harvested crop material related to physical geometries and sizes of the harvested crop material within the feederhouse, and automatically adjusting positions of deck plates of a header of the agricultural harvester based on the at least one metric.

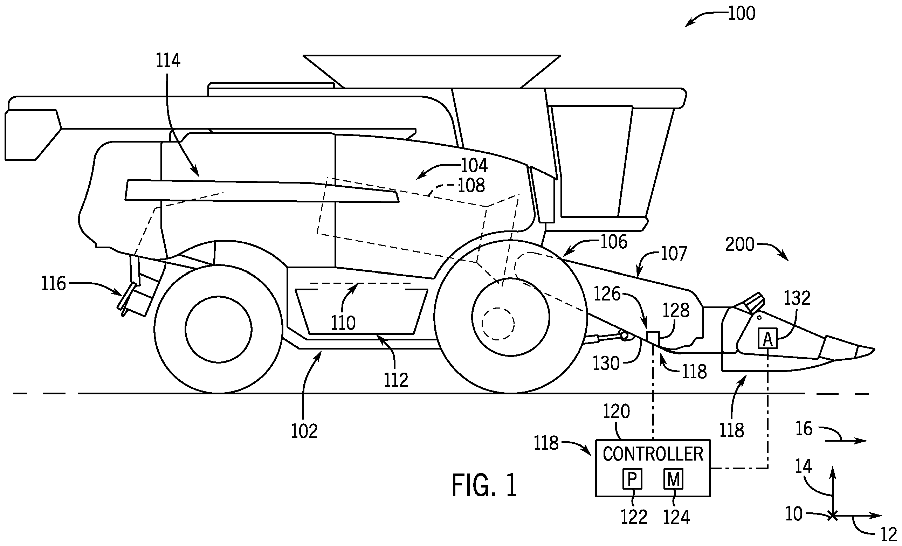

With the foregoing in mind, FIG. 1 is a side view of an embodiment of an agricultural harvester 100 having a corn header 200 (e.g., agricultural header). The agricultural harvester 100 includes a chassis 102 configured to support the corn header 200 and an agricultural crop processing system 104. As described in greater detail below, the corn header 200 is configured to separate ears of corn from stalks and to transport the ears of corn toward an inlet 106 (via a feederhouse 107) of the agricultural crop processing system 104 for further processing of the ears of corn. The agricultural crop processing system 104 receives the ears of corn from the header 200 (via the feederhouse 107) and separates desired crop material from crop residue. For example, the agricultural crop processing system 104 may include a thresher 108 having a cylindrical threshing rotor that transports the ears of corn in a helical flow path through the agricultural harvester 100. In addition to transporting the ears of corn, the thresher 108 may separate certain desired crop material (e.g., corn kernels) from the crop residue, such as husks and cobs, and enable the desired crop material to flow into a cleaning system 110 located beneath the thresher 108. The cleaning system 110 may remove debris from the desired crop material and transport the desired crop material to a storage compartment 112 within the agricultural harvester 100. The crop residue may be transported from the thresher 108 to a crop residue handling system 114, which may remove the crop residue from the agricultural harvester 100 via a crop residue spreading system 116 positioned at the aft end of the agricultural harvester 100.

As discussed in detail below, the header 200 includes multiple row units configured to separate ears of corn from stalks, thereby leaving bare stalks engaged with the soil. The ears of corn are directed toward the inlet 106. The bare stalks that remain engaged with the soil may be collectively referred to as stubble. To facilitate discussion, the agricultural harvester 100 and/or its components (e.g., the corn header 200) may be described with reference to a lateral axis or direction 10, a longitudinal axis or direction 12, and a vertical axis or direction 14. The agricultural harvester 100 and/or its components (e.g., the corn header 200) may also be described with reference to a direction of travel 16.

The agricultural harvester 100 includes a deck plate positioning system 118. The deck plate positioning system 118 includes a control system or controller 120 (e.g., an automation controller, an electronic controller, a programmable controller, a cloud computing system, control circuitry) with a processor 122 (e.g., processing circuitry) and memory 124. The processor 122 may be used to execute software code or instructions stored on the memory 124, such as to process signals and to control operations of the harvester 100. The term "code" or "software code" used herein refers to any instructions or set of instructions that control the operation of the deck plate positioning system 118. The code or software code may exist in a computer-executable form, such as machine code, which is the set of instructions and data directly executed by the processor 122 of the controller 120, human-understandable form, such as source code, which may be compiled in order to be executed by the processor 122 of the controller 120, or an intermediate form, such as object code, which is produced by a compiler. In some embodiments, the deck plate positioning system 118 may include a plurality of controllers.

As an example, the memory 124 may store processor-executable software code or instructions (e.g., firmware or software), which are tangibly stored on a non-transitory computer readable medium. Additionally or alternatively, the memory 124 may store data. As an example, the memory 124 may include a volatile memory, such as random access memory (RAM), and/or a nonvolatile memory, such as read-only memory (ROM), flash memory, a hard drive, or any other suitable optical, magnetic, or solid-state storage medium, or a combination thereof. Furthermore, the processor 122 may include multiple microprocessors, one or more "general-purpose" microprocessors, one or more special-purpose microprocessors, and/or one or more application specific integrated circuits (ASICS), or some combination thereof. For example, the processor 122 may include one or more reduced instruction set (RISC) or complex instruction set (CISC) processors. The processor 122 may include multiple processors, and/or the memory 124 may include multiple memory devices. The processor 122 and/or the memory 124 may be located in any suitable portion of the harvester 100 (e.g., a cab of the harvester 100). Further, the controller 120 may be a distributed controller with the multiple processors 122 and/or the multiple memories 124 in separate housings or locations (e.g., in the header 200, in a remote location, in the cloud).

The deck plate positioning system 118 includes an internal imaging system 126 communicatively coupled to the controller 120. The internal imaging system 126 includes one or more cameras 128 located on a floor 130 of the feederhouse 107. The one or more cameras 128 acquire images of the harvested crop material within the feederhouse 107 (prior to threshing) and communicate signals representative of the acquired images to the controller 120. These images within the feederhouse 107 may be acquired as the agricultural harvester 100 travels through a field of crops.

The controller 120 is configured to receive the signals representative of acquired images from the internal imaging system 126. The controller 120 is also configured to analyze the image by identifying a particular component of the harvested crop material (e.g., kernel, ear, or cob) and measuring at least one metric (e.g., of the identified component) of the harvested crop material related to physical geometries and sizes of the harvested crop material within the feederhouse 107. In certain embodiments, the at least one metric may be a dimension of an ear, a cob, or a kernel of corn. In certain embodiments, the dimension may be a height or a diameter the ear, the cob, and/or the kernel of corn. In certain embodiments, the dimension may be angle of the kernel defined by a tapered end of the kernel. In certain embodiments, the at least one metric may be relative material other than grain (MOG) content in the image (which is a signal indicative of too small of a deck plate position (i.e., too small a gap between adjacent deck plates)) or relative loose kernel content in the image (which is a signal indicative of too small of a deck plate position (i.e., too small a gap between adjacent deck plates)). In certain embodiments, more than one metric of the ear, the cob, and/or the kernel of corn, the MOG content, and the loose kernel content may be measured and/or utilized by the controller 120 (e.g., in controlling deck plate positioning). In certain embodiments, the controller 120 is configured to utilized computer vision in analyzing the images and measuring the metrics within the images.

The controller 120 is further configured to automatically adjust (or select) positions of deck plates (e.g., to an optimal deck plate position) of the header 200 of the agricultural harvester 100 based on the at least one metric. In particular, the controller 120 is configured to automatically adjust a gap (e.g., lateral gap) between adjacent deck plates. In certain embodiments, the controller 120 is configured to adjust the respective gaps between adjacent deck plates to be a set amount (e.g., a particular offset) from the at least one metric. The controller 120 may be configured to keep the respective gaps from exceeding this set amount. For example, if an ear diameter is measures to be 45 millimeters (mm) ± 5 mm, the controller 120 could set the gap to be less than approximately 20 mm from this value. In certain embodiments, the controller 120 is configured to set the gap to be optimal for receiving the crop residue based on the at least one metric. The set amount or optimal gap is set to avoid excess material other than grain (MOG) and excels loss of the desired crop (e.g., corn). The controller 120 is configured to receive and analyze the images and to adjust the deck plate positioning based on the at least one metric as the harvester 100 travels through a field of crops so that the deck plate positioning can be changed to account for variability in crop conditions.

The deck plate positioning system 118 includes actuators 132 coupled to the deck plates and configured to alter a position of the deck plates. The controller 120 is communicatively coupled to the actuators 132 to control the positions of the deck plates (and, thus, the respective gaps between adjacent deck plates) via control signals provided to the actuators 132.

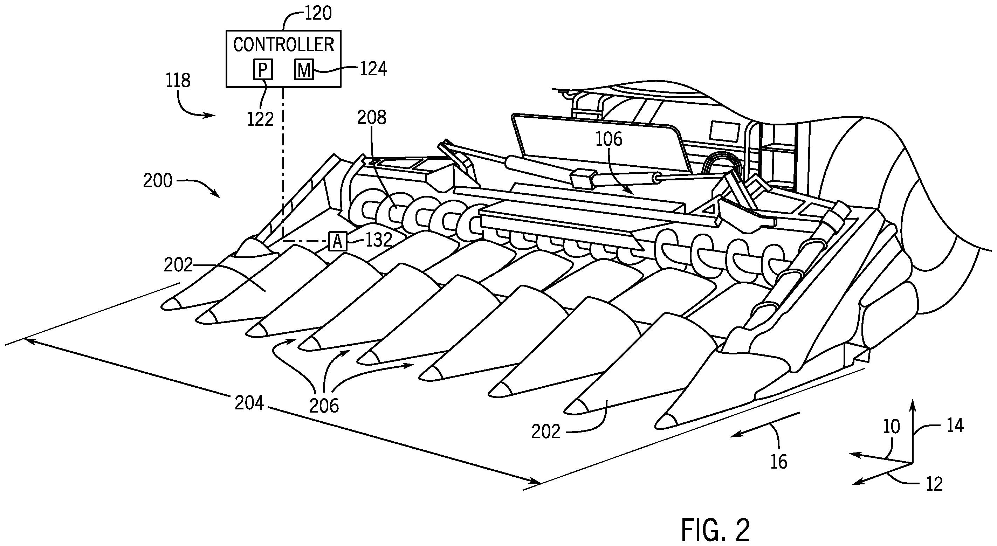

FIG. 2 is a perspective view of an embodiment of the header 200 that may be employed within the agricultural harvester 100 of FIG. 1. In the illustrated embodiment, the header 200 is a corn header and includes multiple dividers 202 configured to separate rows of a crop (e.g., corn). The dividers 202 may be distributed across a width 204 of the header 200 (e.g., along the lateral axis 10). As the header 200 moves along a path, the dividers 202 may direct the crops from each row to row units 206. The row units 206 are configured to receive each crop (e.g., a stalk). A portion of the crops are directed to one of a pair of conveyors 208 (e.g., augers) configured to convey the portion of crops laterally inward to a center crop conveyor at a center of the header 200, and the center crop conveyor directs the portion of crops toward the inlet 106 of the agricultural crop processing system. As illustrated, the conveyors 208 extend along a substantial portion of the width 204 of the header 200 (e.g., along the lateral axis 10). The conveyors 208 may be driven by a drive mechanism (e.g., electric motor, hydraulic motor).

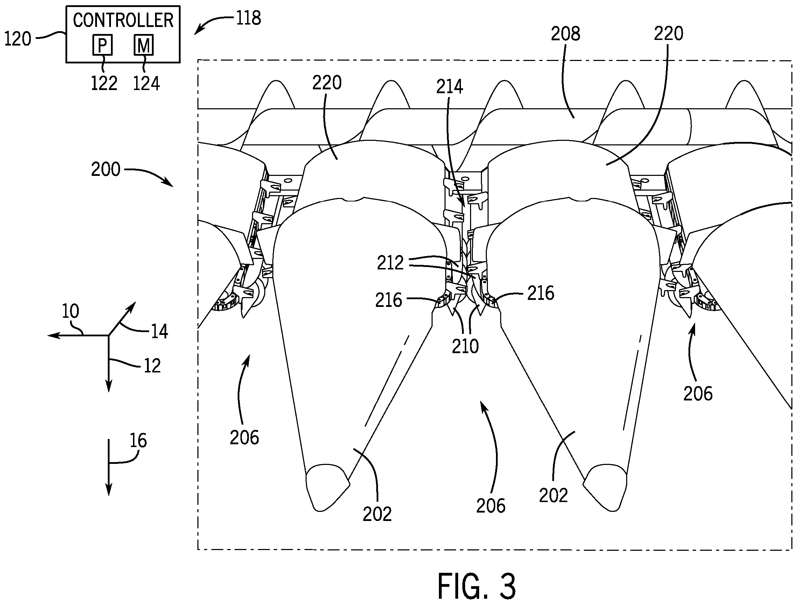

The header 200 may separate the desirable crop material and crop residue from one another to facilitate directing the desirable crop material into the agricultural crop processing system via the inlet 106 and to block entry of the crop residue into the agricultural crop processing system via the inlet 106. For example, operation of the row units 206 may direct the desirable crop material to the conveyors 208 and discharge the crop residue away from the conveyors 208, such as discharging the crop residue directly onto the field. The controller 120 of the deck plate positioning system 118 may provide control signals to actuators 132 to adjust the positioning of deck plates as the harvester 100 cuts the crops, separates the crop residue from the desirable crop material, and discharges the crop residue (e.g., onto the field). Only one actuator 132 is shown in FIG. 2 but each deck plate (e.g., deck plate 212 in FIG. 3) is associated with a respective actuator 132.

FIG. 3 is a perspective front view of a portion of the header 200 of FIG. 2. As shown, the portion of the header 200 includes the dividers 202 that direct the crops to the row units 206. Each row unit 206 includes various components that operate to separate the corn from the crop residue, carry the corn toward the conveyors 208, and return the crop residue to the field. For example, each row unit 206 may include a pair of feed rollers 210 (e.g., snap rollers, stalk rollers, pick rollers) that are configured to grip the crop (e.g., stalk) and rotate in opposite rotational directions to drive the crop residue of the crop toward the field (e.g., vertically downward along the vertical axis 14; below the header 200) for discharge from the header 200. Each row unit 206 also includes a pair of deck plates 212 that are positioned over the pair of feed rollers 210. Each deck plate 212 extends from a first end to a second end along the longitudinal axis 12, and the pair of deck plates 212 are separated from one another along the lateral axis 10 to define a gap 214. The pair of deck plates 212 are spaced apart so that the gap 214 is sized to enable the crop residue to move through the gap 214, but to block the desirable crop material (e.g., ears of corn) from moving through the gap 214. Accordingly, the deck plates 212 may receive the desirable crop material and block entry of the desirable crop material through the gap 214. Further, each row unit 206 may include a pair of chains 216 (e.g., with lugs) that are configured to drive or push the desirable crop material along the pair of deck plates 212 toward the conveyors 208. In some embodiments, the pair of deck plates 212 are automatically adjustable (via control signals from the controller 120 of the deck plate positioning system 118) and may be driven (e.g., via one or more actuators 132 in FIGS. 1 and 2) toward and away from one another along the lateral axis 10 to change a size of the gap 214 (e.g., a width along the lateral axis 10).

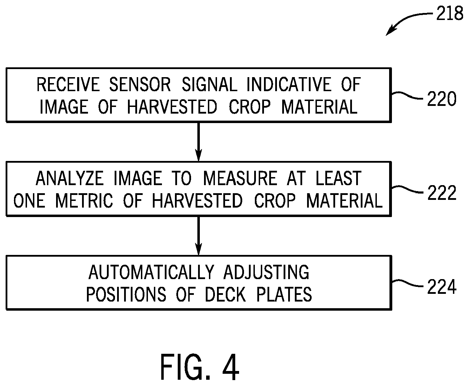

FIG. 4 is a flowchart of a method 218 for controlling positioning of deck plates of the agricultural harvester 100 in FIG. 1. One or more steps of the method 218 may be may be performed by the controller 120 in FIG. 1. The steps of the method 218 may be repeated as the agricultural harvester 100 traverses a field of a crop (where crop conditions may vary).

The method 218 includes receiving a sensor signal indicative of an image of harvested crop material (prior to threshing) within a feederhouse of the agricultural harvester (block 220). The image is an internal image from within the feederhouse provided by one or more cameras (of an internal imaging system) located on a floor of the feederhouse.

The method 218 also includes analyzing the image by identifying a particular component of the harvested crop material (e.g., kernel, ear, or cob) and measuring at least one metric of the harvested crop material (e.g., of the identified component) related to physical geometries and sizes of the harvested crop material within the feederhouse (block 222). In certain embodiments, the at least one metric may be a dimension of an ear, a cob, or a kernel of corn. In certain embodiments, the dimension may be a height or a diameter the ear, the cob, and/or the kernel of corn. In certain embodiments, the dimension may be angle of the kernel defined by a tapered end of the kernel. In certain embodiments, the at least one metric may be relative material other than grain (MOG) content in the image (which is a signal indicative of too small of a deck plate position (i.e., too small a gap between adjacent deck plates)) or relative loose kernel content in the image (which is a signal indicative of too small of a deck plate position (i.e., too small a gap between adjacent deck plates)). In certain embodiments, more than one metric of the ear, the cob, and/or the kernel of corn, the MOG content, and the loose kernel content may be measured and/or utilized by the controller (e.g., in controlling deck plate positioning). In certain embodiments, the controller may utilize computer vision in analyzing the images and measuring the metrics within the images.

The method 218 further includes automatically adjusting positions of deck plates of a header of the agricultural harvester based on the at least one metric (block 224). In particular, the method 218 includes automatically adjust a gap (e.g., lateral gap) between adjacent deck plates. In certain embodiments, the respective gaps between adjacent deck plates are automatically adjusted to be a set amount (e.g., a particular offset) from the at least one metric. In certain embodiments, the positions of the deck plates are automatically adjusted to keep the respective gaps from exceeding this set amount. For example, if an ear diameter is measures to be 45 millimeters (mm) ± 5 mm, the controller 120 could set the gap to be less than approximately 20 mm from this value. In certain embodiments, the respective gaps are set to be optimal for receiving the crop residue based on the at least one metric.

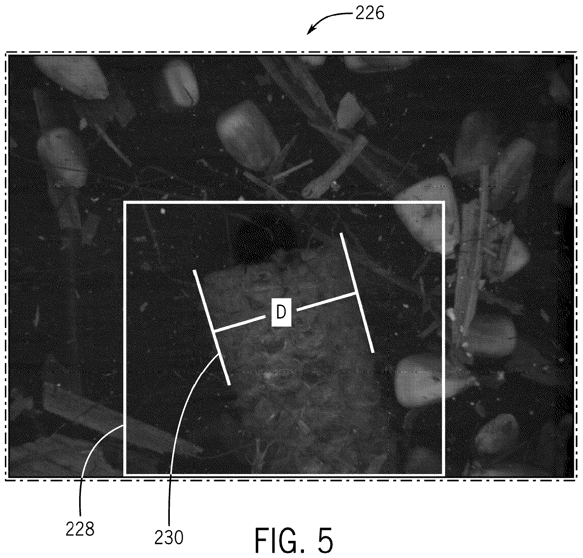

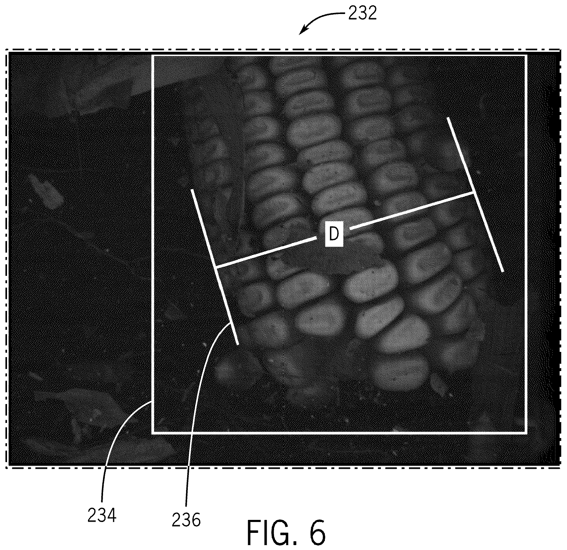

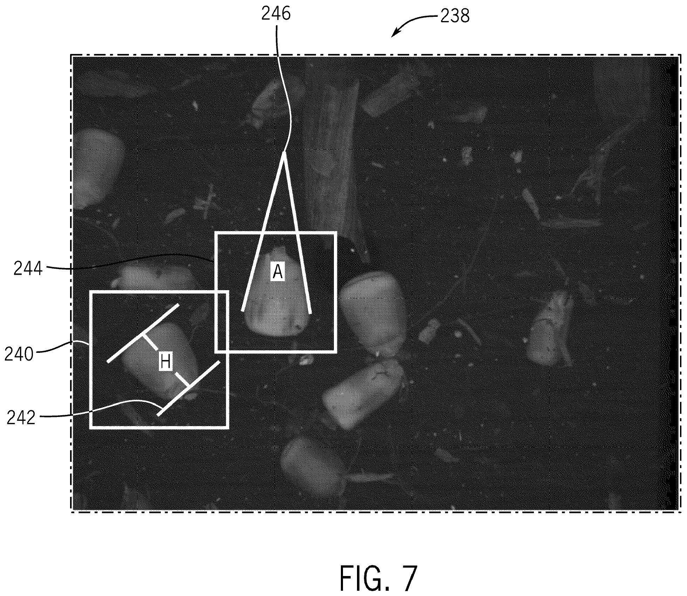

FIGS. 5-7 are different examples of metrics measured via the analysis of images (e.g., internal images) of the harvested crop material within the feederhouse. FIG. 5 is an example of an internal image 226 of harvested crop material within a feederhouse with a metric of a cob measured. As depicted in the internal image 226, the identification of a cob is indicated by box 228. Also, as depicted in the internal image 226, a diameter 230 is measured of the cob. FIG. 6 is an example of an internal image 232 of harvested crop material within a feederhouse with a metric of an ear measured. As depicted in the internal image 232, the identification of an ear is indicated by box 234. Also, as depicted in the internal image 232, a diameter 236 is measured of the ear. FIG. 7 is an example of an internal image 238 of harvested crop material within a feederhouse with a metric of a kernel measured. As depicted in the internal image 238, the identification of a first kernel is indicated by box 240. Also, as depicted in the internal image 238, a height 242 is measured of the first kernel. As depicted in the internal image 238, the identification of a second kernel is indicated by box 244. Also, as depicted in the internal image 238, an angle 246 is measured of the second kernel with respect to the tapered end.

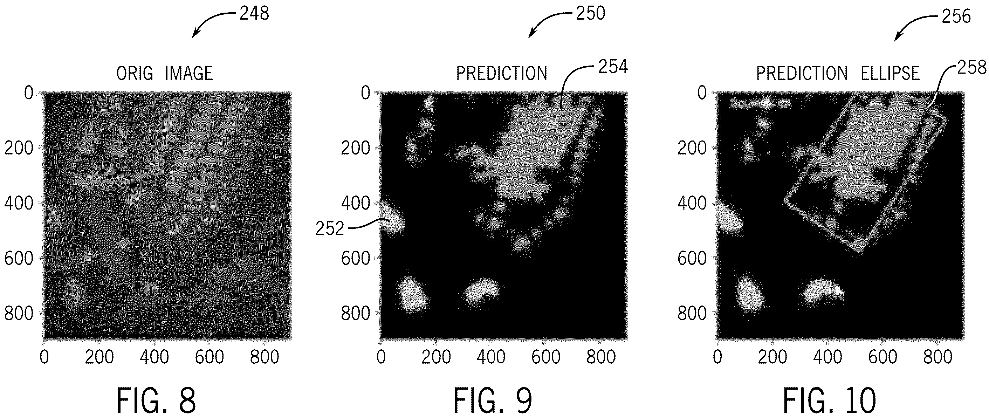

FIGS. 8-10 relate to analysis internal images of harvested crop material for MOG content and loose kernel content. FIG. 8 is an example of an internal image 248 of harvested crop material within a feederhouse to be analyzed (or prior to analysis). FIG. 9 is an example of an analyzed internal image 250 (of the internal image 248 in FIG. 8) with the loose kernels highlighted a first color (as indicated by reference numeral 252) and kernels of an ear of corn highlighted a second color (as indicated by reference numeral 254) different from the first color as predicted by an image processing algorithm. FIG. 10 is an example of an analyzed internal image 256 (of the analyzed internal image 250 in FIG. 9) with a box 258 (e.g., prediction ellipse) disposed about the ear of corn as determined by an image processing algorithm. This type of image analysis enables a metric to be determined of MOG content in the image (which is a signal indicative of too small of a deck plate position (i.e., too small a gap between adjacent deck plates)) and/or of relative loose kernel content in the image (which is a signal indicative of too small of a deck plate position (i.e., too small a gap between adjacent deck plates)) which may be utilized to control the deck plate positioning.

By incorporating the systems and methods disclosed herein with agricultural harvesters, the process of harvesting crop material (e.g., corn) is more efficient. For example, automatically adjusting the deck plate positions based on crop geometries measured using image processing enables the optimal deck plate positioning to be utilized as crop conditions change throughout a field.

## Claims

1. A deck plate positioning system (118) for an agricultural harvester (100), **characterized in that** the deck plate positioning system (118) comprises:
a controller (120) comprising a memory (124) and a processor (122), wherein the controller (120) is configured to:
receive a sensor signal indicative of an image of harvested crop material within a feederhouse (107) of the agricultural harvester (100);
analyze the image to measure at least one metric of the harvested crop material related to physical geometries and sizes of the harvested crop material within the feederhouse (107); and
automatically adjust positions of deck plates (212) of a header (200) of the agricultural harvester (100) based on the at least one metric.

2. The deck plate positioning system (118) of claim 1, further comprising an internal imaging system (126) comprising at least one camera (128) configured to be located within the feederhouse (107) on a floor (130) of the feederhouse (107), wherein the internal imaging system (126) is communicatively coupled to the controller (120) to provide the sensor signal indicative of the image.

3. The deck plate positioning system (118) according to any of the claims 1 to 2, wherein the at least one metric comprises relative material other than grain content in the image, relative loose kernel content in the image, or a dimension of an ear, a cob, or a kernel of corn.

4. The deck plate positioning system (118) according to any of the claims 1 to 3, wherein the at least one metric comprises a diameter of an ear of corn.

5. The deck plate positioning system (118) to any of the claims 1 to 4, wherein the controller (120) is configured as the agricultural harvester (100) travels through a crop field to continuously:
receive sensor signals indicative of images of the harvested crop material within the feederhouse (107);
analyze the images to measure the at least one metric of the harvested crop material within the feederhouse (107); and
automatically adjust the positions of deck plates (212) based on the at least one metric.

6. The deck plate positioning system (118) to any of the claims 1 to 5, wherein the controller (120) is configured to automatically adjust respective gaps (214) between adjacent deck plates (212) of the header (200) based on the at least one metric.

7. An agricultural harvester comprising a corn header and a deck plate positioning system (118) according to any of the previous claims.

8. A method for controlling positioning of deck plates of an agricultural harvester, **characterized in that** the method comprises:
receiving, at a controller (120) comprising a processor (122) and a memory (124), a sensor signal indicative of an image of harvested crop material within a feederhouse (107) of the agricultural harvester (100);
analyzing, via the controller (120), the image to measure at least one metric of the harvested crop material related to physical geometries and sizes of the harvested crop material within the feederhouse (107); and
automatically adjusting, via the controller (120), positions of deck plates (212) of a header (200) of the agricultural harvester (100) based on the at least one metric.

9. The method of claim 8, wherein receiving the sensor signal indicative of the image of harvested crop material comprises receiving the sensor signal from an internal imaging system (126) comprising at least one camera (128) located within the feederhouse (107) on a floor (130) of the feederhouse (107).

10. The method according to any of the claims 8 to 9, wherein the at least one metric comprises relative material other than grain content in the image, relative loose kernel content in the image, or a dimension of an ear, a cob, or a kernel of corn.

11. The method according to any of the of claims 8 to 10, wherein the at least one metric comprises a diameter of an ear of corn.

12. The method according to any of the claims 8 to 11, wherein the at least one metric comprises a diameter of a cob of corn.

13. The method according to any of the claims 8 to 12, further comprising, as the agricultural harvester (100) travels through a crop field, continuously:
receiving sensor signals indicative of images of the harvested crop material within the feederhouse (107);
analyzing the images to measure the at least one metric of the harvested crop material within the feederhouse (107); and
automatically adjusting the positions of deck plates (212) based on the at least one metric.

14. The method according to any of the claims 8 to 13, wherein automatically adjusting the positions of deck plates (212) comprises automatically adjusting respective gaps (214) between adjacent deck plates (212) of the header (200) based on the at least one metric.

15. The method according to claim 14, wherein automatically adjusting the respective gaps (214) between the adjacent deck plates (212) comprises adjusting the respective gaps (214) to be a set amount from the at least one metric.
